## Europäisches Patentamt

## European Patent Office

## Office européen des brevets

(19)

(11) Veröffentlichungsnummer: **0 077 461**
B1

(12) **EUROPÄISCHE PATENTSCHRIFT**

(45) Veröffentlichungstag der Patentschrift:
20.04.88

(51) Int. Cl.⁴: **B 01 D 46/26**, D 01 H 11/00

(21) Anmeldenummer: **82108293.0**

(22) Anmeldetag: **09.09.82**

(54) **Vorrichtung zum Abtragen einer Vliesschicht an einer drehbaren Filtertrommel.**

(30) Priorität: **21.10.81 CH 6712/81**

(43) Veröffentlichungstag der Anmeldung:
**27.04.83 Patentblatt 83/17**

(45) Bekanntmachung des Hinweises auf die Patenterteilung:
**20.04.88 Patentblatt 88/16**

(84) Benannte Vertragsstaaten:
**CH DE FR GB IT LI NL**

(56) Entgegenhaltungen:
**EP - A - 0 075 403**
**AU - A - 214 854**
**CH - A - 568 780**
**FR - A - 2 384 042**

(73) Patentinhaber: **MASCHINENFABRIK RIETER AG,
Postfach 290, CH-8406 Winterthur (CH)**

(72) Erfinder: **Weber, Kurt, Hohrain, CH-8353 Elgg (CH)**
Erfinder: **Mondini, Giancarlo, Wylandstrasse 10,
CH-8400 Winterthur (CH)**
Erfinder: **Mandl, Gerhard, Dorfstrasse 413,
CH-8311 Brütten (CH)**

## Beschreibung

Die Erfindung bezieht sich auf eine Vorrichtung zum Abtragen einer Vliesschicht an einer in einem Filtergehäuse drehbaren Filtertrommel mit einem an einer Unterdruckquelle angeschlossenen Innenraum, wobei die Vorrichtung Mittel zur Abnahme der Vliesschicht ab der Filtertrommel umfasst, die in einer Öffnung am Gehäuse vorgesehen sind sowie mit einer stationären Abdeckung im Innern der Filtertrommel versehen ist, welche denjenigen zylindrischen Teil der Filtertrommel gegenüber dem im Unterdruck stehenden Innenraum dichtend abdeckt, an dem die Vliesschicht durch die genannten Mittel abgenommen wird.

Solche Vorrichtung finden zum Beispiel Anwendung bei Filtern für Ringspinnmaschinen. In solchen Filtern werden vom Aspirationssystem gesammelte Fasern zurückgewonnen. Der Druckverlust im System setzt sich im wesentlichen aus den Widerständen der Filtertrommel und des Vlieses zusammen. Dickere Vliese wirken zusätzlich als Filter und unterstützen dadurch die Abscheidung, setzen jedoch dadurch höhere Unterdrücke in der dem Filter nachgeschalteten Unterdruckquelle voraus. Anderseits verursachen höhere Unterdrücke grössere Falschluftmengen (auch Leckluft genannt) an schlecht abgedichteten Übergangsstollen zwischen bewegten und stationären Elementen.

Aus der australischen Patentschrift Nr. 214 854 ist eine Vorrichtung gemäss dem Oberbegriff des ersten Patentanspruches bekannt, bei der die Vorrichtung zum Abtragen der Vliesschicht aus einer Vliesverdichtungswalze, einer Vliesablösewalze und einer gegen Falschlufteintritt dichtenden Abdeckung besteht, die mit zwei schmalen, radial gegen die Innenwand der Filtertrommel gerichtet, anliegenden Gummidichtungen versehen ist. Mittels dieser Gummidichtungen bildet die stationäre Abdeckung an der Filtertrommel den genannten, gegenüber dem Unterdruck dichtend abgedeckten Bereich.

Ein die Filtertrommel umgebendes Gehäuse weist eine Einlassöffnung für die Fasertransportluft und im Bereich der Vorrichtung zum Abtragen der Vliesschicht eine Auslassöffnung für die Vliesschicht auf.

Ein Nachteil dieser Vorrichtung besteht darin, dass die schmalen Gummidichtungen der Abdeckung bei schwacher Anpresskraft einen schlechten Dichtungseffekt ergeben oder bei starker Anpresskraft einen zu hohen Verschleiss verursachen. Eine schlechte Dichtung hat jedoch den Nachteil, dass im Vliesabtragbereich die das Vlies gegen die Filtertrommel pressende angesaugte Luftströmung nicht vollständig unterbrochen ist, so dass Schwierigkeiten im Ablösen der Vliesschicht entstehen können.

Ein weiterer Nachteil dieser Vorrichtung besteht darin, dass die Auslassöffnung derart gestaltet ist, dass durch die genannte Einlassöffnung Falschluft in das Gehäuse eintreten kann, was die Fasertransportluftmenge entsprechend reduziert.

Der im Anspruch 1 angegebenen Erfindung liegt deshalb die Aufgabe zugrunde, eine Vorrichtung nach dem Oberbegriff des ersten Anspruches zu schaffen, bei der einerseits die genannte Lufströmung im Vliesabtragbereich praktisch vollständig unterbrochen ist, und die zusätzlich ein Eintreten der genannten Falschluft verhindert.

Die durch die Erfindung erreichten Vorteile sind im wesentlichen darin zu sehen, dass einerseits das Ablösen des Vlieses im Abtragbereich der Filtertrommel mit grosser Sicherheit erreicht wird und anderseits im wesentlichen keine unnütze Falschluft den Betrieb verteuert.

Im folgenden wird eie Erfindung anhand von Ausführungswege darstellenden Zeichnungen näher erläutert.

Es zeigen:

Fig. 1 ein Querschnitt durch ein Filtergehäuse mit einer Filtertrommel sowie durch eine erfindungsgemässe Vorrichtung, halbschematisch dargestellt

Fig. 2 ein Ausschnitt von Fig. 1 mit der erfindungsgemässen Vorrichtung, vergrössert und halbschematisch dargestellt

Fig. 3, 4 und 7 je eine Variante eines Teiles der erfindungsgemässen Vorrichtung, vergrössert und halbschematisch dargestellt

Fig. 5 ein Ausschnitt gemäss Fig. 2 mit einem zusätzlichen Detail, schematisch dargestellt

Fig. 6 ein Längsschnitt durch das Filtergehäuse und die Filtertrommel von Fig. 1 entsprechend der Richtung I–I, halbschematisch dargestellt.

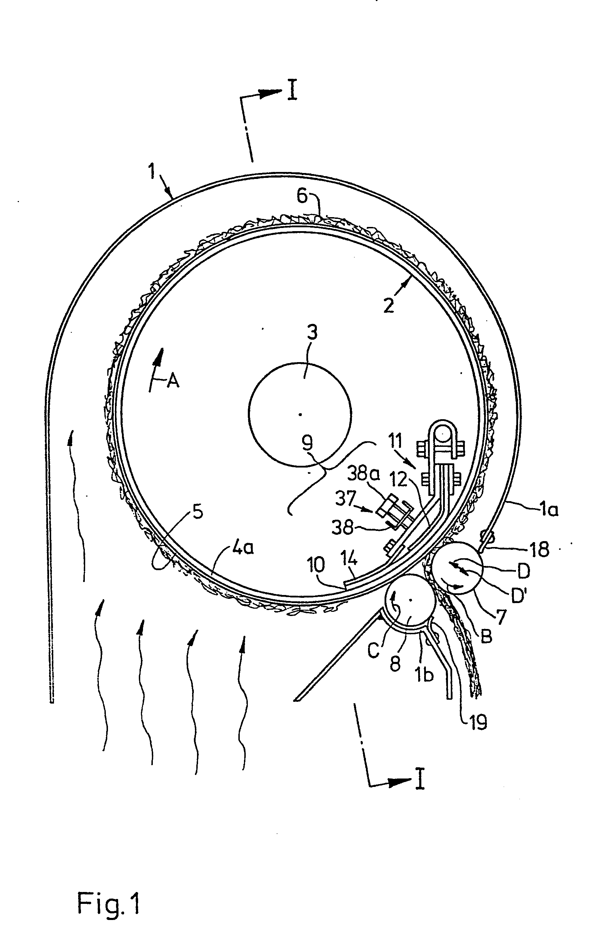

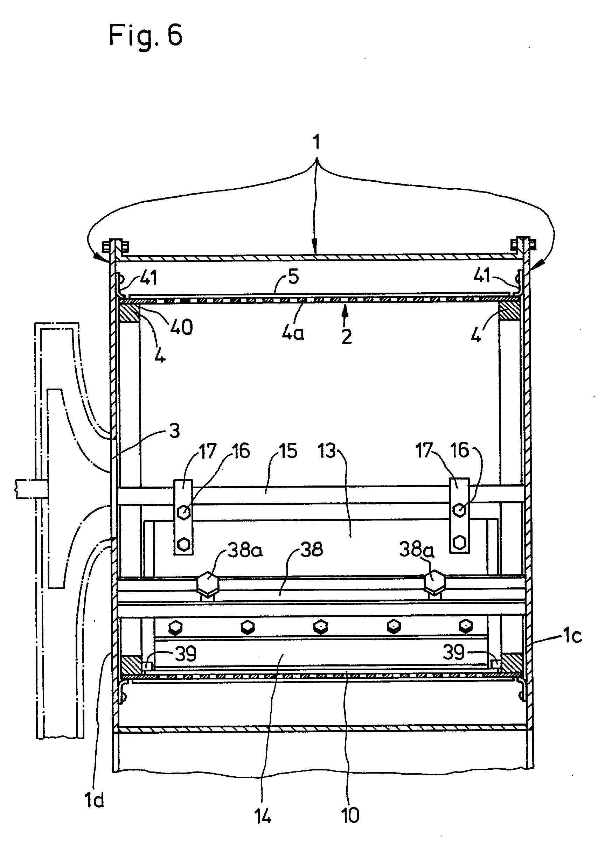

In einem Gehäuse 1 (Fig. 1 und 6) ist eine drehbar gelagerte (Lagerung nicht gezeigt) Filtertrommel 2 (Fig. 1 bis 6) vorgesehen, in deren Innenraum ein Einlass 3 einer Unterdruckquelle mündet, z.B. eines Radialventilators (in Figur 6 mit strichpunktierten Linien angedeutet). Ein Antrieb (nicht gezeigt) versetzt die Filtertrommel 2 entweder schrittweise oder kontinuierlich in eine Drehbewegung, in Richtung A.

Die Filtertrommel umfasst im wesentlichen einen auf Stützringen 4 aufgezogenen Lochblechmantel 4a auf dem ein Filtertuch 5 aufgezogen ist. Auf diesem Filtertuch 5 setzen sich mit dem vom Ventilator angesaugten Transportluftstrom (in Fig. 1 mit gewellten Pfeilen angedeutet) transportierte Fasern und Verunreinigungen ab und bilden eine Vliesschicht 6. Um diese Vliesschicht 6 abzutragen wird eine Vorrichtung verwendet, die sich im wesentlichen aus einer Vliesverdichtungswalze 7, einer Vliesablösewalze 8 und einer Abdeckung 9 zusammensetzt.

Die Walzen 7 und 8 sind je drehbar gelagert und angetrieben (beides nicht gezeigt) und haben eine glatte, jedoch matte Oberfläche. Die Walze 7 resp. 8 dreht in Richtung B resp. C.

Die Abdeckung 9 umfasst einen Dichtungslappen 10 der den Lochblechmantel auf dessen Innenseite derart dicht abdeckt, dass mindestens in dem Bereich, in welchem die Vliesschicht 6 von der Filtertrommel 2 abgelöst werden muss, der Luftdurchtritt in das Innere der Filtertrommel verhindert wird, so dass an dieser Stelle kein dynamischer Luftdruck (auch Staudruck genannt) auf die Vliesschicht wirkt. Der genannten Bereich entspricht im wesentlichen dem Abstand zwischen denjenigen Stellen am Umfang der Filtertrommel, an der die Walzen 7 und 8 an die Filtertrommeln grenzen.

Der Dichtungslappen 10 besteht z.B. aus Polyurethan von 3 mm Dicke oder aus einem auf einem 1 mm dicken Habasitriemen aufgeleimten Federstahlblech von 0,15 mm Dicke und ist an seinem, in Drehrichtung der Vliestrommel gesehen, vorderen Ende in einer stationären Halterung 11 befestigt.

Gemeinsam mit dem Dichtungslappen 10 ist ein erstes Stützblech 12 und eine Stütze 13 an der Halterung 11 befestigt.

An der Stütze 13 ist ein zweites Stützblech 14 befestigt. Beide Stützbleche sind aus federndem Stahlblech hergestellt und drücken mittels ihrer Vorspannung den Dichtungslappen auf die zylindrische Innenwand der Filtertrommel. Das Stützblech 12 und 14 kann aus einzelnen umfänglich gerichteten Blechstreifen (nicht gezeigt) bestehen, die an der Halterung 11, resp. an der Stütze 13, befestigt sind.

Im weiteren umfasst die Halterung einen an einer Stange 15 aus Rundstahl mittels Schraube 16 fixierten Bügel 17, zur Aufnahme des Dichtungslappens 10, des Stützbleches 12 der Stütze 13.

Der runde Querschnitt der Stange 15 erlaubt ein Drehen des Bügels 17 und dadurch ein Anpassen der Anpresskraft des Dichtungslappens 10. Die Stange 15 ist am Gehäuse 1 befestigt.

Das Gehäuse 1 ist im Bereich der Walzen 7 und 8 offen. Diese Öffnung ist durch die Gehäusepartien 1a, 1b, 1c und 1d begrenzt.

Der Gehäuseinnenraum wird gegenüber der Atmosphäre einerseits durch den engen, die Vliesschicht 6 klemmenden Spalt zwischen den Walzen 7 und 8, sowie durch eine erste an der Walze 7 anliegende Lippendichtung 18 und eine zweite an der Walze 8 anliegende Lippendichtung 19 abgedichtet.

Die erste Lippendichtung 18 ist an der Gehäusepartie 1a, und die zweite Lippendichtung 19 an der Gehäusepartie 1b befestigt.

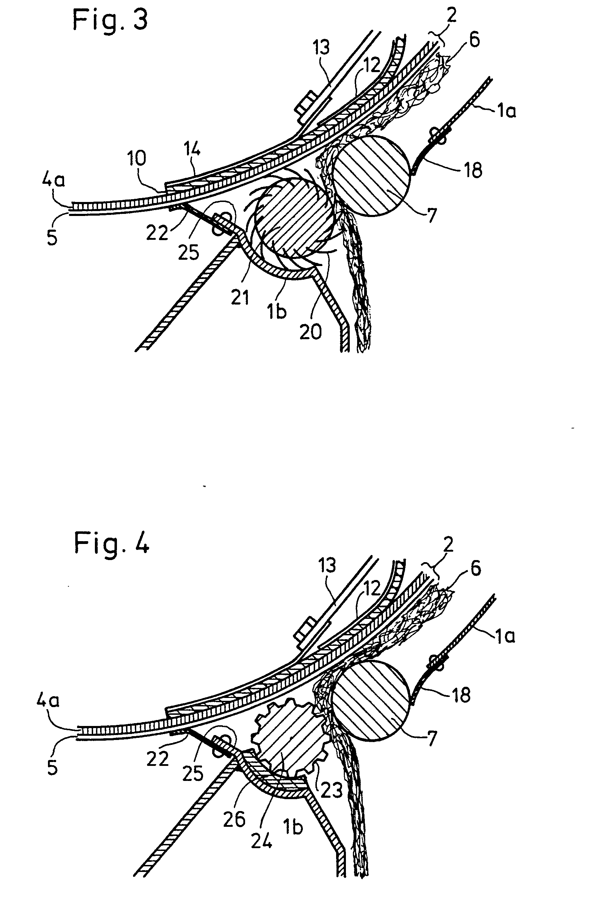

Anstelle einer glatten Walze 8 kann eine mit Lippen 20 (Fig. 3) versehene Vliesablösewalze 21 verwendet werden.

Das Gehäuse 1 muss für diese Variante zusätzlich mit einem Gehäuseteil 25 versehen werden, an dem eine an die Filtertrommel 2, insbesondere an das Filtertuch 5, anliegende dritte Lippendichtung 22 befestigt ist. Diese dritte Lippendichtung 22 übernimmt die Funktion der nicht verwendeten zweiten Lippendichtung 19.

Die Lippen 20 können an der Gehäusepartie 1b anliegen und bilden dadurch hilfsmässig eine primäre Dichtung zwischen Gehäuseinnenraum und Atmosphäre.

Als weitere Variante kann anstelle der vorgenannten Walze 21 eine mit Nuten 23 versehene Vliesablösewalze 24 verwendet werden.

Als vorgenannte hilfsweise primäre Dichtung kann zwischen der Walze 24 und der Gehäusepartie 1b eine, z.B. aus Polyurethan hergestellte und mit der Gehäusepartie 1b verbundene, gegenüber der Walze federnde Zwischenlage 26 vorgesehen werden.

Polyurethan erlaubt ein Gleiten der Walze 24 auf der zwischenlage 26. Auch für diese zweite Variante wird die Lippendichtung verwendet.

Die Vliesverdichtungswalze 7 liegt bei Beginn des Betriebes, d.h. solange noch keine Vliesschicht 6 die Filtertrommel 2 bedeckt, in einer Ausgangsposition (Fig. 5) an der Filtertrommel 2, sowie an der Vliesabnahmewalze 8, resp. 21, 24, an und ist aus dieser Position in Pfeilrichtung D' wegschwenkbar. Die Pfeilrichtung D resp. D' entsprechen praktisch einer Winkelhalbierenden 27 eines Winkels α, der durch einen Schenkel 28 und durch einen Schenkel 29 begrenzt wird. Der Schenkel 28 geht dabei durch die Drehachse 30 der sich in Ausgangsposition befindlichen Vliesverdichtungswalze 7 und durch die Drehachse 31 der Vliesabnahmwalze 8, während der Schenkel 29 durch die Achse 30 geht und senkrecht zu einer gemeinsamen Tangente 32 der Filtertrommel 2 und der Walze 7 steht.

Die Schwenkbarkeit der Vliesverdichtungswalze 7 in Richtung D resp. D' wird dadurch erreicht, dass diese Walze an beiden Stirnseiten in Schwenkarmen 34 (mit strichpunktierter Linie angedeutet) gelagert ist, die um eine Achse 33 (nur schematisch dargestellt) schwenkbar sind.

Die, die Achse 33 und die Achse 30 verbindenden Schwenkarme 34 stehen in Ausgangsposition der Walze 7, senkrecht zur Winkelhalbierenden 27 des Winkels.

Mit Druckfedern 35, die je zwischen einem Gehäuseteil 36 und den Schwenkarmen eingespannt sind, wird die Walze 7 in Pfeilrichtung D gegen die Vliesschicht 6 gedrückt. Die Feder 35, sowie der Gehäuseteil 36 ist der Einfachheit halber in Fig. 5 lediglich andeutungsweise gezeigt.

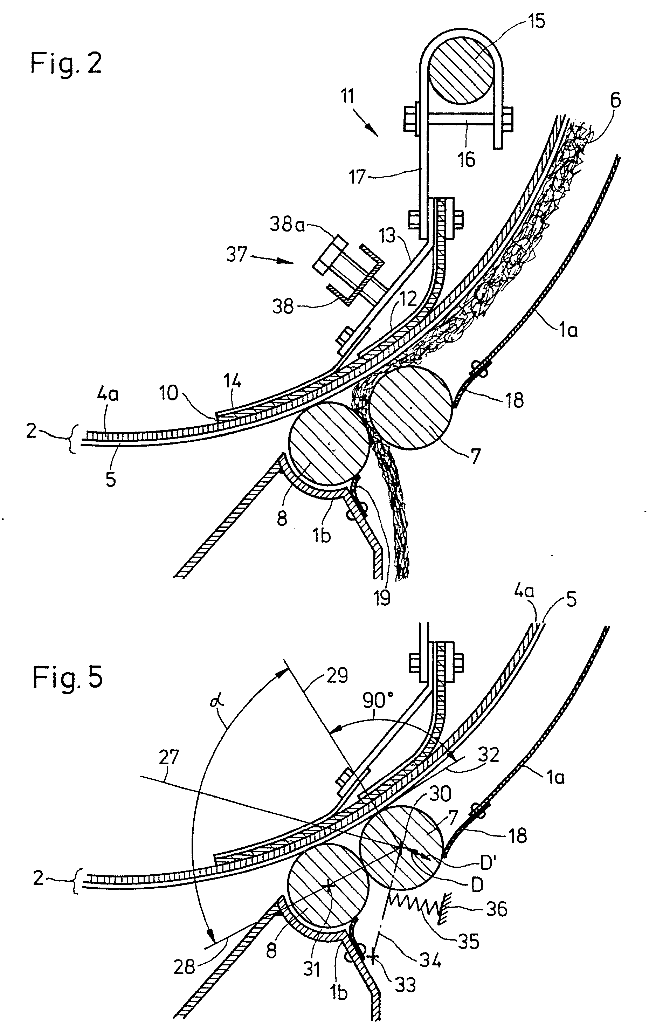

Im weiteren werden, um die Vorspannung der Stützbleche 12 und 14 und dadurch den Anpressdruck des Dichtungslappens 10 auf den Lochblechmantel zu verändern, ein Spannelement 37, bestehend aus zwei in einem Steg 38 (Fig. 2 und 5) vorgesehene Stellschrauben 38a verwendet. Die Schrauben 38a drücken dabei auf die Stützen 13. Der Steg 38 ist mit den beiden Gehäusepartien 1c und 1d des Gehäuses 1 verbunden.

Die Schrauben 16 müssen für das Verändern des Anpressdruckes gelöst werden.

Sind die Stützbleche 12 und 14, wie bereits erwähnt, in eine Anzahl einzelner Stützbleche aufgeteilt, so benötigt jede einzelne Stütze eine Stellschraube 38a.

Wie ebenfalls bereits erwähnt und aus Fig. 6 ersichtlich überdeckt der Dichtungslappen 10 die Lochung (nicht schraffierte Partien) des Lochblechmantels 4a derart, dass auch seitlich praktisch keine Luft im Bereich des Dichtungslappens in den Innenraum der Filtertrommel gelangen kann.

Um ein genannte seitliches Eindringen von Luft auch dann zu verhindern, wenn gegebenenfalls die Filtertrommel 2 in den Randbereichen durch unsorgfältiges Behandeln oder sonstige Einwirkung eingebuchtet, d.h. mit Vertiefungen versehen wäre, sind die an die Stützringe 4 grenzenden Ränder des Dichtungslappens 10 mit einem Filzstreifen 39 (Fig. 6) versehen, der an den axial gegen den Innenraum gerichteten Innenflächen 40 der Stützringe 4 dichtend anliegt.

Der Filz kann z.B. auf dem Dichtungslappen 10 aufgeklebt sein.

Im weiteren sind Ringlipendichtungen 41 (Fig. 6) an den Stirnwänden 1c und 1d des Gehäuses 1 vorgesehen, die dicht am Lochblechmantel 4a anliegen und dadurch ein Eindringen von Falschluft in den Filtertrommelinnenraum verhindern.

Als Variante zur mit den Figuren 1 bis 5 gezeigten Abdeckung 9 kann eine Schicht Schaumgummi (nicht gezeigt) zwischen dem Stützblech 12, resp. 14, und dem Dichtungslappen 10 vorgesehen werden, um den Bewegungen eines mit kleinen Unebenheiten versehenen Lochblechmantels folgen zu können.

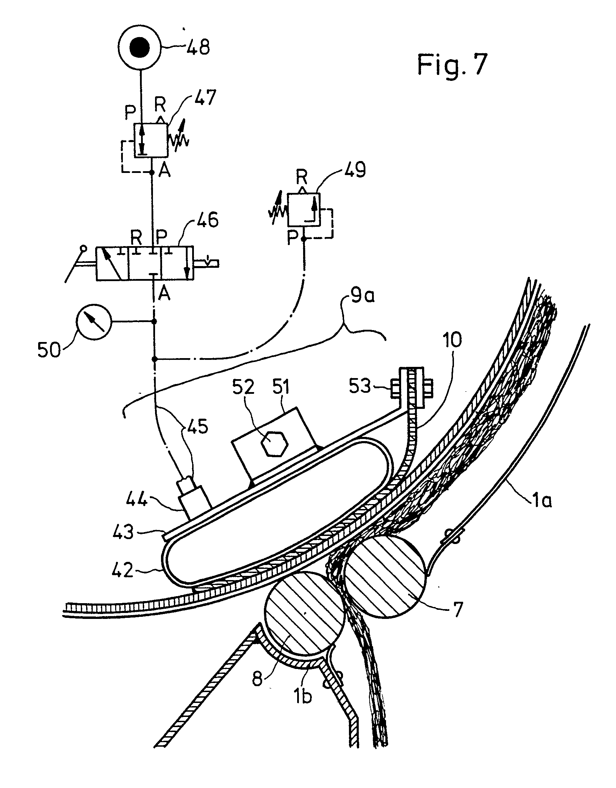

Als weitere Variante kann in einer Abdeckung 9a ein Luftbalg 42 (Figur 7) vorgesehen werden, der zwischen einer Stützplatte 43 und dem Dichtungslappen 10 angeordnet und mit der Stützplatte 43 verbunden ist. Mittels eines Anschlussnippels 44 ist ein Luftzufuhrrohr 45 mit dem Luftbalg 42 verbunden. Das Luftzufuhrrohr 45 führt (die Fortsetzung davon ist in Figur 7 mit strichpunktierten Linien dargestellt) durch die den Ventilator gegenüberliegende Stirnwand 1c des Gehäuses 1 und ist ausserhalb dieses Gehäuses über ein 3/3-Weg-Ventil 46 mit Sperr-Mittel-Stellung und über ein Druckregelventil 47 mit Abluftöffnung R mit einer Druckluftquelle 48 verbunden. Im weiteren ist zwischen dem Anschlussnippel 44 und dem 3/3-Weg-Ventil 46 am Luftzufuhrrohr 45 ein einstellbares Druckregelventil 49 (auch Überströmventil genannt) mit Abluftöffnung R sowie ein Manometer 50 angeschlossen, welche ebenfalls ausserhalb des Gehäuses vorgesehen sind.

Soll für den Betrieb der Luftbalg 42 mit Druckluft beschickt werden, wird das Ventil 46 aus der in Figur 7 gezeigten Mittelstellung in eine Stellung gebracht, in der die Anschlüsse P und A verbunden sind. Mittels Druckregelventil 47 kann der Luftbalg 43 mit einem gewünschten, am Manometer 50 ablesbaren, Druck beschickt werden. Nach Erreichen dieses Druckes wird das Ventil 46 wieder in die Mittelstellung gebracht, so dass auch bei Druckabfall im Druckluftzufuhrsystem der Luftdruck im Luftbalg 42 erhalten bleibt.

Soll bei Betriebsunterbruch der Luftbalg 42 entlüftet werden, so wird das Ventil 46 in die dritte Stellung gebracht, in der die Anschlüsse A und R miteinander verbunden sind, wodurch die im Luftbalg 42 befindliche Luft in die Atmosphäre entweichen kann.

Das Ventil 49 schützt den Luftbalg 42 vor Überdruck.

Ausserdem ist die Stützplatte 43 mittels je einem mit der Stützplatte verbundenen Winkel 51 und je einer Schraube 52 an jeder Seitenwand des Gehäuses befestigt. Der Dichtlappen 10 ist durch eine Schraubverbindung 53 an der Stützplatte 43 befestigt.

**Patentansprüche**

1. Vorrichtung zum Abtragen einer Vliesschicht an einer in einem Filtergehäuse (1) drehbaren Filtertrommel (2) mit einem an einer Unterdruckquelle (3) angeschlossenen Innenraum, wobei die Vorrichtung eine Vliesverdichtungswalze (7) und eine Vliesablösewalze (8) zur Abnahme der Vliesschicht (6) ab der Filtertrommel (2) umfasst, die in einer mittels Wänden (1a, 1b) abgegrenzten Öffnung am Gehäuse vorgesehen sind, sowie mit einer stationären Abdeckung (9, 9a) im Innern der Filtertrommel (2) versehen ist, welche denjenigen zylindrischen Teil der Filtertrommel gegenüber dem im Unterdruck stehenden Innenraum dichtend abdeckt, an dem die Vliesschicht (6) durch die genannten Walzen (7, 8) abgenommen wird, dadurch gekennzeichnet, dass die Abdeckung (9; 9a) einen an der zylindrischen Innenwand der Filtertommel (2) anliegenden flexiblen Dichtungslappen (10) umfasst, welcher über den gesamten, abgedeckten Teil der Filtertrommel an der Innenwand der Filtertrommel anliegt und dass der Dichtungslappen anpressbar ist.

2. Vorrichtung nach Anspruch 1, dadurch gekennzeichnet, dass die Abdeckung (9; 9a) Mittel (12, 14, 37; 42) zum Anpressen des Dichtungslappens (10) an der zylindrischen Innenwand der Filtertrommel (2) umfasst.

3. Vorrichtung nach Anspruch 2, dadurch gekennzeichnet, dass die Mittel zusätzlich zwischen Dichtungslappen (10) und Stützblechen (12, 14) eine Schaumgummimatte (nicht gezeigt) als plastisch federndes Element umfassen.

4. Vorrichtung nach Anspruch 2, dadurch gekennzeichnet, dass die Mittel ein an einer Abdekkung (9a) befestigter, mit Pressluft gefüllter Luftbalg (42) sind.

5. Vorrichtung nach Anspruch 4, dadurch gekennzeichnet, dass der Luftbalg (42) mittels einem Druckregelventil (47) und einem 3/3-Weg Ventil (46) mit Pressluft beschickt wird, deren Druck einstellbar ist.

6. Vorrichtung nach einem der Ansprüche 1 bis 5, dadurch gekennzeichnet, dass zwischen den beiden Walzen (7 resp. 8) und Wandteilen (1a resp. 1b) sowie zwischen Stirnwänden (1c resp. 1d) des Gehäuses 1 und der Trommel (2) je derart eine Dichtung (18 resp. 19, resp. 41) vorgesehen ist, sod dass sie gemeinsam eine Dichtung zwischen dem Innenraum der Filtertrommel (2) und der Atmosphäre bilden.

7. Vorrichtung nach einem der Ansprüche 1 bis 6, dadurch gekennzeichnet, dass die Vliesabnahmewalze (8) einen Walzenkörper mit elastischen Lippen (20) umfasst, sowie dass die an diese angrenzende Wand (1b) derart konkav gewölbt und in einem solchen Abstand von der Vliesabnahmewalze (8) geführt ist, dass die Lippen (20) eine Dichtung zwischen Wand und Walzenkörper bilden.

8. Vorrichtung nach einem der Ansprüche 1 bis 7, dadurch gekennzeichnet, dass im Endbereich des Dichtungslappens (10), in Drehrichtung der Filtertrommel (2) gesehen, eine an der zylindrischen Aussenseite der Filtertrommel anliegende Dichtungslippe (22) vorgesehen ist, die an der der Vliesablösewalze (8) benachbarten, die Öffnung abgrenzenden, wand (1b, 25) befestigt ist und die gemeinsam mit dem Endbereich des Dichtungslappens (10) eine Dichtung zwischen Innenraum und Atmosphäre bildet.

9. Vorrichtung nach einem der Ansprüche 1 bis 8, dadurch gekennzeichnet, dass die Filtertrommel (2) zwei Stützringe (4) zur Aufnahme eines Lochblechmantels (4a) umfasst, und dass am Dichtungslappen (10) beidseits ein Filzstreifen (39) vorgesehen ist, der am entsprechenden Stützring (4) anliegend eine zusätzliche Dichtung im Bereich der Abdeckung bildet.

**Claims**

1. Apparatus for removing a web from a filter drum (2) rotatable in a filter housing (1), a source (3) of vaccum communicating with the interior of the drum, the apparatus comprising a web condensing roller (7) and a web stripping roller (8) for stripping the web from the drum (2), the rollers being provided in an opening in the housing, which opening is defined by walls (1a, 1b), the apparatus being further provided with a stationary screen (9, 9a) in the interior of the filter drum (2) to separate sealingly from the interior subjected to underpressure, that cylindrical portion of the filter drum at which the web (6) is stripped by the said rollers (7, 8) characterised in that the screen (9, 9a) comprises a flexible sealing sheet (10) engaging the cylindrical internal wall of the filter drum (2), the sheet engaging the internal wall of the filter drum over the whole of the screened portion of the drum and in that the sealing sheet can be pressed against the wall.

2. Apparatus according to claim 1 characterised in that the screen (9; 9a) comprises means (12, 14, 37; 42) for pressing the sealing sheet (10) against the cylindrical internal wall of the filter drum (2).

3. Apparatus according to claim 2 characterised in that the means additionally comprises a foam rubber mat (not shown) as a plastic spring element between the sealing sheet (10) and support plates (12, 14).

4. Apparatus according to claim 2 characterised in that the means is an air bag (42), filled with pressure air, secured to a screen (9a).

5. Apparatus according to claim 4, characterised in that the air bag (42) is supplied with pressure air via a pressure regulating valve (47) and a 3/3-way valve (46), the air pressure being adjustable.

6. Apparatus according to one of claims 1 to 5 characterised in that respective seals (18 or 19 or 41) are provided between the two rollers (7 or 8) and wall portions (1a or 1d), and between end walls (1c or 1d) of the housing (1) and the drum (2), in such manner that they together form a seal between the interior of the filter drum (2) and the atmosphere.

7. Apparatus according to one of claims 1 to 6 characterised in that the web stripping roller (8) comprises a roller body with elastic lips (20), and in that the wall (1b) adjoining the lips has a concave curvature and is located with a spacing from the web stripping roller (8), such that the lips (20) form a seal between wall and roller body.

8. Apparatus according to one of claims 1 to 7 characterised in that in the end region of the sealing sheet (10), as viewed in the direction of rotation of the filter drum (2), a sealing lip (22) is provided engaging the cylindrical external surface of the filter drum (2), the lip being secured to the wall (1b, 25) which defines the opening and is adjacent the web stripping roller (8), and the lip acting together with the end region of the sealing sheet (10) to form a seal between the interior and the atmosphere.

9. Apparatus according to one of claims 1 to 8 characterised in that the filter drum (2) comprises two support rings (4) for receiving a perforated metal envelope (4a), and in that a felt strip (39) is provided on each side on the sealing sheet (10), the felt strip adjoining the corresponding support ring (4) to form an additional seal in the region of the screen.

**Revendications**

1. Dispositif pour enlever une couche membraneuse d'un tambour filtrant (2) rotatif, disposé dans un carter de filtre (1), possédant une chambre intérieure raccordée à une source de dépression (3), dispositif qui comprend un rouleau de compression de la couche (7), et un rouleau détacheur de couche (8) pour enlever la couche membraneuse (6) du tambour filtrant (2), rouleaux qui sont prévus dans une ouverture du carter, limitée par des parois (1a, 1b), ainsi qu'un recouvrement stationnaire (9, 9a) prévu à l'intérieur du tambour filtrant (2), qui recouvre d'une manière étanche, par rapport à la chambre intérieure mise en dépression, la partie cylindrique du tambour filtrant, sur laquelle la couche membraneuse (6) est enlevée à l'aide des rouleaux cités (7, 8), caractérisé par le fait que le recouvrement (9, 9a) comprend une languette d'étanchéité flexible (10) qui s'appuie sur la paroi intérieure cylindrique du tambour filtrant (2), languette qui s'appuie sur la paroi intérieure du tambour filtrant et sur toute la partie recouverte du tambour filtrant, et que la languette d'étanchéité peut être mise en pression contre la paroi intérieure du tambour filtrant.

2. Dispositif selon revendication 1, caractérisé par le fait que le recouvrement (9, 9a) comprend des moyens (12, 14, 37; 42) permettant de presser la languette d'étanchéité (10) contre la paroi intérieure cylindrique du tambour filtrant (2).

3. Dispositif selon revendication 2, caractérisé par le fait que les moyens comprennent en plus un matelas de mousse (non montré) comme élément élastique déformable, situé entre la languette d'étanchéité (10) et les tôles d'appui (12, 14).

**0 077 461**

4. Dispositif selon revendication 2, caractérisé par le fait que le moyen est un coussin d'air (42) rempli avec de l'air comprimé, qui est fixé sur un recouvrement (9a).

5. Dispositif selon revendication 4, caractérisé par le fait que le coussin d'air (42) est mis en charge par de l'air comprimé dont la pression peut être réglée à l'aide d'une vanne de réglage de pression (47) et d'une vanne à 3/3 voies (46).

6. Dispositif selon l'une des revendications 1 à 5, caractérisé par le fait que, entre les deux rouleaux (7 respectivement 8) et les parties de paroi (1a respectivement 1b), ainsi qu'entre les parois frontales (1c respectivement 1d) du carter (1) et le tambour (2), des joints d'étanchéité (18 respectivement 19, respectivement 41) sont prévus de telle manière qu'ils forment ensemble une étanchéité entre la chambre intérieure du tambour filtrant (2) et l'atmosphère.

7. Dispositif selon l'une des revendications 1 à 6, caractérisé par le fait que le rouleau détacheur de couche (8) comprend un corps en forme de rouleau possédant des lèvres élastiques (20), et que la paroi (1b) adjacente à celles-ci est courbée d'une manière concave et est maintenue avec une distance telle par rapport au rouleau détacheur de couche (8) que les lèvres (20) forment une étanchéité entre la paroi et le corps en forme de rouleau.

8. Dispositif selon l'une des revendications 1 à 7, caractérisé par le fait que, vu dans le sens de rotation du tambour filtrant (2), et dans la zone finale de la languette d'étanchéité (10), une lèvre d'étanchéité (22) est prévue en appui sur la face cylindrique extérieure du fambour filtrant, languette qui est fixée sur la paroi (1b, 25), voisine du rouleau détacheur de couche (8) et qui délimite l'ouverture, et forme ainsi, conjointement avec la zone finale de la languette d'étanchéité (10), une étanchéité entre la chambre intérieure du tambour filtrant et l'atmosphère.

9. Dispositif selon l'une des revendications 1 à 8, caractérisé par le fait que le tambour filtrant (2) comprend deux anneaux de support (4) pour la réception d'une enveloppe en tôle perforée (4a), qu'une bande de feutre (39) est prévue de chaque côté sur la languette d'étanchéité (10), et qui forme une étanchéité supplémentaire dans la zone du recouvrement en s'appuyant sur l'anneau de support correspondant (4).

Fig.1

Fig. 2

Fig. 5

Fig. 3

Fig. 4

# Fig. 6

Fig. 7